# EUROPÄISCHE PATENTSCHRIFT

(11) **EP 0 476 704 B1**
(45) Veröffentlichungstag und Bekanntmachung des Hinweises auf die Patenterteilung: **21.12.1994**
(21) Anmeldenummer: 91116067.9
(22) Anmeldetag: 20.09.1991
(51) Int. Cl.: B01D 46/04, B01J 8/24

(54) **Verfahren zum Führen von Prozessgas in einer Apparatur sowie Apparatur zum Durchführen des Verfahrens**
Process for directing a process gas through an apparatus as well as the apparatus for it
Procédé pour guider un gaz de traitement dans un dispositif ainsi que le dispositif utilisé

(30) Priorität: 21.09.1990 DE 4030086
(43) Veröffentlichungstag der Anmeldung: 25.03.1992
(73) Patentinhaber: Hüttlin Coating-Technik GmbH, D-79585 Steinen (DE)
(72) Erfinder: Hüttlin, Herbert, D-79585Steinen (DE)
(74) Vertreter: Weller, Wolfgang, Dr.rer.nat.

(56) Entgegenhaltungen:
- EP-A- 0 080 754
- EP-A- 0 103 894
- DE-A- 3 941 321

## Beschreibung

Die Erfindung betrifft ein Verfahren zum Führen von Prozeßgas, das in einer Apparatur, insbesondere Wirbelbettapparatur, eine Prozeßkammer und anschließend eine Filtergruppe mit einer Gesamtanzahl von mindestens zwei Filterpatronen durchströmt, während turnusmäßig jeweils eine Teilanzahl der Filterpatronen für von der Prozeßkammer kommende Strömung gesperrt und in entgegengesetzter Richtung von einem Reinigungsgas durchströmt wird.

Ein solches Verfahren und eine zu dessen Durchführung geeignete Apparatur ist aus der DE-A-22 32 032 bekannt. Zu der Apparatur gehört ein Behälter, in dessen oberen Teil eine Sammelkammer durch einen Zwischenboden abgeteilt ist. Der Zwischenboden hat mehrere Durchlässe, an denen je eine Filterpatrone, bestehend aus einem Filterkorb und einem darübergezogenen Filtersack, aufgehängt ist. In der Sammelkammer ist über jedem Durchlaß eine Haube an einem Faltenbalg aufgehängt. Der Innenraum jedes Faltenbalgs ist an eine Druckgasleitung angeschlossen und mit dem Innenraum der zugehörigen Haube durch eine Membranventilsirene verbunden.

Bei abgeschalteter Druckgasleitung nehmen die Hauben je eine Stellung in einem Abstand oberhalb des zugehörigen Durchlasses ein, so daß Prozeßgas durch die zugehörige Filterpatrone und den Durchlaß hindurch in die Sammelkammer strömen kann, von wo es durch einen Gasauslaß abgeführt wird. Turnusmäßig wird in einen einzelnen oder in eine Gruppe der Faltenbälge Druckluft eingeleitet; dadurch wird jeder betroffene Faltenbalg gedehnt, so daß die an ihm befestigte Haube sich auf den zugehörigen Auslaß setzt und ihn von der Sammelkammer trennt. Infolgedessen kann die zugehörige Filterpatrone nicht mehr von Prozeßluft durchströmt werden. Durch die Membranventilsirene und die zugehörige Haube wird jedoch Druckluft in die betreffende Filterpatrone eingeleitet, so daß deren Filtersack aufgebläht wird, wodurch er von an seiner Außenseite abgelagertem Staub befreit werden soll.

Der angestrebte Reinigungserfolg stellt sich jedoch bei der bekannten Apparatur nicht immer ein, da sich die Faltenbälge nur dann in der erforderlichen Weise dehnen, wenn die eingeleitete Druckluft in den Membranventilsirenen stark gedrosselt, also entspannt und infolgedessen auch abgekühlt wird. Dabei verliert die Druckluft soviel Energie, daß sie nicht mehr genügend Reinigungskraft hat. Außerdem besteht die Gefahr, daß der Taupunkt unterschritten wird, so daß die Filtersäcke von innen her durchfeuchtet werden und der an ihrer Außenseite angelagerte Staub noch fester haftet. Dadurch erhöht sich der Strömungsverlust, den das Prozeßgas in der Filtergruppe erleidet. Die Verwendung von Druckluft zum Abreinigen der Filter erfordert zusätzlich einen nennenswerten Energieaufwand und erzeugt erheblichen Lärm.

Der Erfindung liegt deshalb die Aufgabe zugrunde, staubhaltiges Prozeßgas mit geringerem Energieaufwand und weniger Lärm zu entstauben.

Die Aufgabe ist erfindungsgemäß ausgehend von einem Verfahren der eingangs beschriebenen Gattung dadurch gelöst, daß der Apparatur Prozeßgas in einer Gesamtmenge zugeführt wird, die den Gasbedarf der Prozeßkammer im Verhältnis der genannten Teilanzahl zur Gesamtanzahl Filterpatronen übersteigt, die überschüssige Teilmenge Prozeßgas in der Apparatur vor der Prozeßkammer abgezweigt, als Reinigungsgas durch die genannte Teilanzahl Filterpatronen geleitet und anschließend zusammen mit der aus der Prozeßkammer kommenden Restmenge Prozeßgas durch die Restanzahl Filterpatronen hindurch abgeführt wird.

Erfindungsgemäß wird also zum Reinigen von jeweils einer Teilanzahl Filterpatronen die gleiche Teilmenge Prozeßgas je Zeiteinheit verwendet, von der diese Teilanzahl Filterpatronen auch im normalen Betrieb durchströmt wird. Ein Unterschied gegenüber dem normalen Betrieb besteht somit nur darin, daß die betreffende Teilanzahl Filterpatronen von frischem Prozeßgas und in umgekehrter Richtung durchströmt wird. Damit wird erreicht, daß durch das Reinigen einer Teilanzahl Filterpatronen weder die Arbeit der Restanzahl Filterpatronen noch der in der Prozeßkammer stattfindende eigentliche Prozeß, beispielsweise Wirbelbettprozeß, nennenswert gestört wird.

Die Erfindung betrifft ferner eine Apparatur, insbesondere Wirbelbettapparatur, zum Durchführen des beschriebenen Verfahrens, mit einem Behälter, der einen Gaseinlaß und einen Gasauslaß aufweist und eine durch ein zentrales Rohr an den Gaseinlaß angeschlossene Prozeßkammer, eine an den Gasauslaß angeschlossene Sammelkammer sowie eine zwischen diesen Kammern angeordnete Filtergruppe mit mehreren Filterpatronen enthält. Eine solche Apparatur ist aus der EP-A-0 103 894 bekannt.

Die oben angegebene Erfindungsaufgabe ist, soweit sie eine Apparatur betrifft, erfindungsgemäß ausgehend von einer Apparatur der im Vorstehenden beschriebenen Gattung dadurch gelöst, daß die Sammelkammer zwischen der Prozeßkammer und einer Verteilkammer angeordnet ist, die den Gaseinlaß aufweist, mit der Prozeßkammer durch das zentrale Rohr verbunden ist und mit den Filterpatronen turnusmäßig durch je eine Doppelventilanordnung verbindbar ist, die anschließend in eine Ruhestellung rückstellbar ist, in der sie einen Gasstrom von der zugehörigen Filterpatrone in die Sammelkammer zuläßt, diese jedoch von der Verteilkammer trennt.

Vorteilhafte Weiterbildungen der erfindungsgemäßen Apparatur sind Gegenstand der Ansprüche 3 bis 5.

Ein Ausführungsbeispiel der Erfindung wird im folgenden anhand schematischer Zeichnungen mit weiteren Einzelheiten erläutert. Es zeigen:
- Fig. 1: einen senkrechten Axialschnitt durch eine erfindungsgemäße Wirbelbettapparatur;
- Fig. 2: einen vergrößerten Ausschnitt aus dem oberen Teil der Fig. 1; und

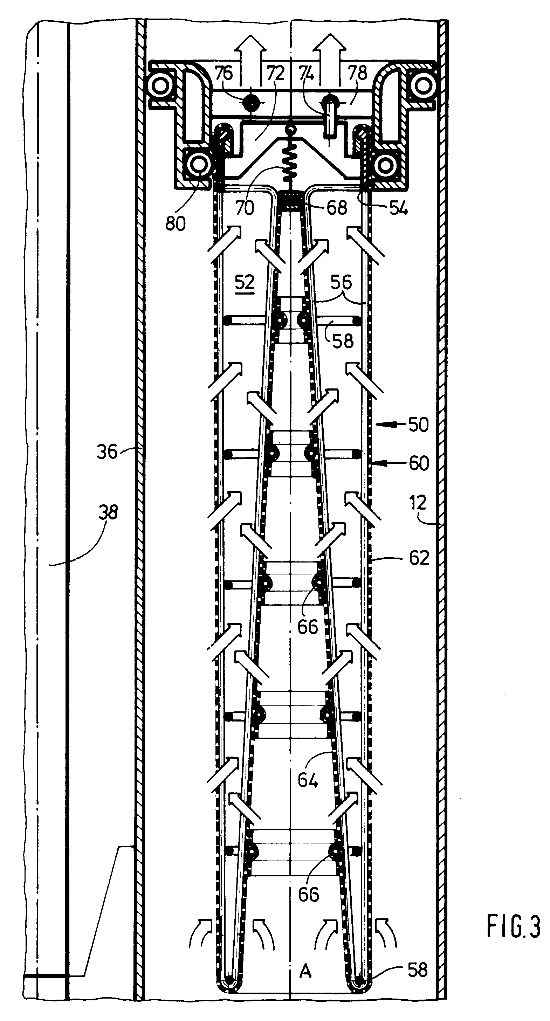

- Fig. 3: einen vergrößerten Ausschnitt aus dem mittleren Teil der Fig. 1.

Die dargestellte Apparatur hat einen Behälter 10 mit einem zylindrischen Behälterteil 12, einem darunter angeordneten sphärischen Behälterteil 14 und einem unter diesem angeordneten schüsselförmigen Umlenkteil 16. Der Innenraum des sphärischen Behälterteils 14 und des Umlenkteils 16 ist teilweise durch ein rotationssymmetrisches hohles Kernstück 18 ausgefüllt, in das von unten her ein im wesentlichen kegelförmiges Verschlußstück 20 hineinragt.

Der Behälter 10 ist oben mit einem Deckel 22 verschlossen und enthält zwischen diesem und einem darunter angeordneten oberen Zwischenboden 24 eine Verteilkammer 26, die einen Gaseinlaß 28 aufweist. Der Behälter 10 enthält ferner zwischen dem oberen Zwischenboden 24 und einem unteren Zwischenboden 30 eine Sammelkammer 32, die einen Gasauslaß 34 aufweist. Die Verteilkammer 26 ist durch ein zentrales Rohr 36, das sich vom oberen Zwischenboden 24 senkrecht nach unten erstreckt und in das hohle Kernstück 18 mündet, ständig mit dem untersten Teil des Behälters 10 so verbunden. Der obere Zwischenboden 24 ist durch einen Zuganker 38 mit dem zentralen Rohr 36 und über dieses mit dem unteren Zwischenboden 30 axial zusammengespannt.

Prozeßgas, das durch den Gaseinlaß 28 in die Verteilkammer 26 und von dort weiter durch das zentrale Rohr 36 und das hohle Kernstück 18 nach unten strömt, wird vom Verschlußstück 20 und vom Umlenkteil 16 nach oben umgelenkt und strömt durch einen ringförmigen Expansionsraum 40, der durch eine kegelstumpfförmige Innenfläche des Umlenkteils 16 und eine komplementäre Außenfläche des Kernstücks 18 begrenzt ist. Von dort gelangt das Prozeßgas durch einen zylindrischen Ringspalt 42, in dem Zwei- oder Dreistoff-Düsen 44 senkrecht angeordnet sind, in eine Prozeßkammer 46, die vom sphärischen Behälterteil 14, vom Kernstück 18 und vom unteren Bereich des zylindrischen Behälterteils 12 begrenzt ist.

Der untere Zwischenboden 30 weist mehrere rings um das zentrale Rohr 36 in gleichmäßigen Abständen angeordnete Durchlässe 48 auf, an denen je eine Filterpatrone 50 aufgehängt ist. Die Gesamtanzahl der Filterpatronen 50 beträgt beispielsweise sechs; davon ist jeweils eine Teilanzahl von mindestens einer Filterpatrone für verbrauchte Prozeßluft gesperrt, so daß diese durch die Restanzahl höchstens fünf Filterpatronen 50 und die zugehörigen Durchlässe 48 hindurch in die Sammelkammer 32 gelangt und von dort durch den Gasauslaß 34 abströmt.

Jede Filterpatrone 50 hat einen Filterkorb 52 mit einem Tragring 54 und mehreren daran befestigten Drahtbügeln 56, die sich vom Tragring 54 längs je einer Mantellinie eines gedachten Zylinders nach unten erstrecken, um einen kreisförmigen unteren Stützring 58 herum nach innen gebogen sind und sich von dort längs je einer Mantellinie eines sich nach oben verjüngenden gedachten Kegels nach oben erstrecken und schließlich radial nach außen zum Tragring 54 hin gebogen und an ihm befestigt sind. Die äußeren, längs je einer Zylindermantellinie angeordneten Teile der Drahtbügel 56 sind durch zusätzliche, von innen her an ihnen befestigte Stützringe 58 miteinander verbunden.

Zu jeder Filterpatrone 50 gehört ferner ein Filterschlauch 60, der einen zylindrischen äußeren Teil 62 und einen kegelförmigen inneren Teil 64 aufweist. Der zylindrische Teil 62 des Filterschlauchs 60 bildet eine äußere Umhüllung, während sein kegelförmiger Teil 64 eine innere Auskleidung des Filterkorbes 52 bildet. In den kegelförmigen Teil 64 sind Versteifungsringe 66 eingenäht. Der zylindrische Teil 62 ist oben am Tragring 54 festgeklemmt; der kegelförmige Teil 64 hat ein geschlossenes oberes Ende 68, das mit einer Feder 70 an einem diametral im Stützring 58 befestigten Joch 72 des Filterkorbes 52 aufgehängt ist.

Am Joch 72 sind symmetrisch zueinander zwei hakenartig abgebogene Stifte 74 befestigt, die durch Drehen der Filterpatrone 50 um ihre Achse A in je einem Loch 76 einer Traverse 78 befestigt sind, welche sich diametral durch den zugehörigen Durchlaß 48 erstreckt und am unteren Zwischenboden 30 befestigt ist. Jede Filterpatrone 50 ist im zugehörigen Durchlaß 48 mittels einer in diesen eingebetteten, aufblähbaren Ringdichtung 80 dicht festgeklemmt.

Jeder Filterpatrone 50 ist eine Doppelventilanordnung zugeordnet, die aus folgenden Bauteilen besteht: Am oberen Rand jedes der Durchlässe 48 im unteren Zwischenboden 30 ist ein ringförmiger Ventilsitz 82 ausgebildet, dem ein elastischer, ringscheibenförmiger Dichtkörper 84 am unteren Ende eines Rohrstücks 86 zugeordnet ist. Jedes Rohrstück 86 ist über einen Stelltrieb 88, beispielsweise eine pneumatische Kolbenzylindereinheit, am oberen Zwischenboden 24 aufgehängt und mit einem an diesem ausgebildeten Durchlaß 90 mittels eines Faltenbalgs 92 verbunden.

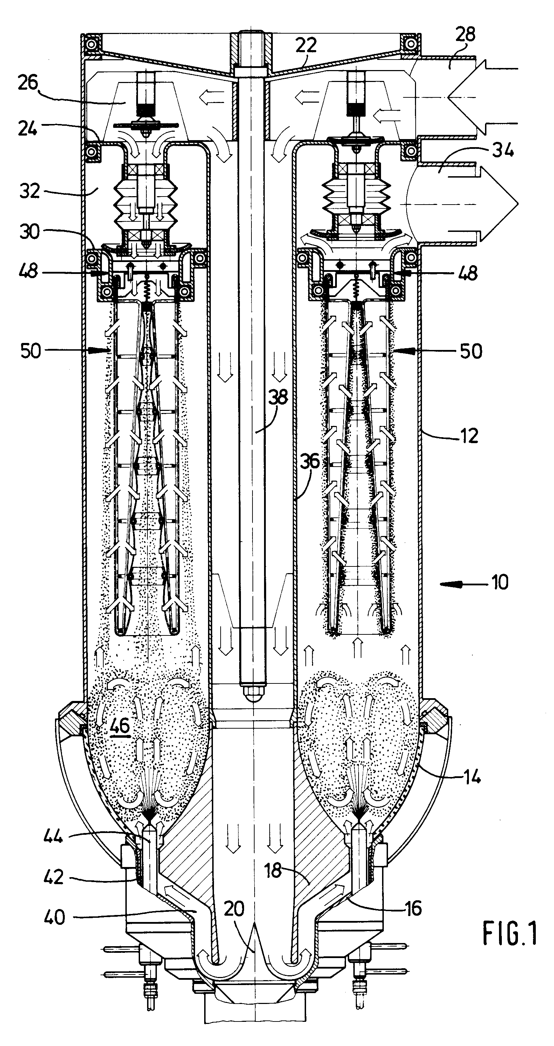

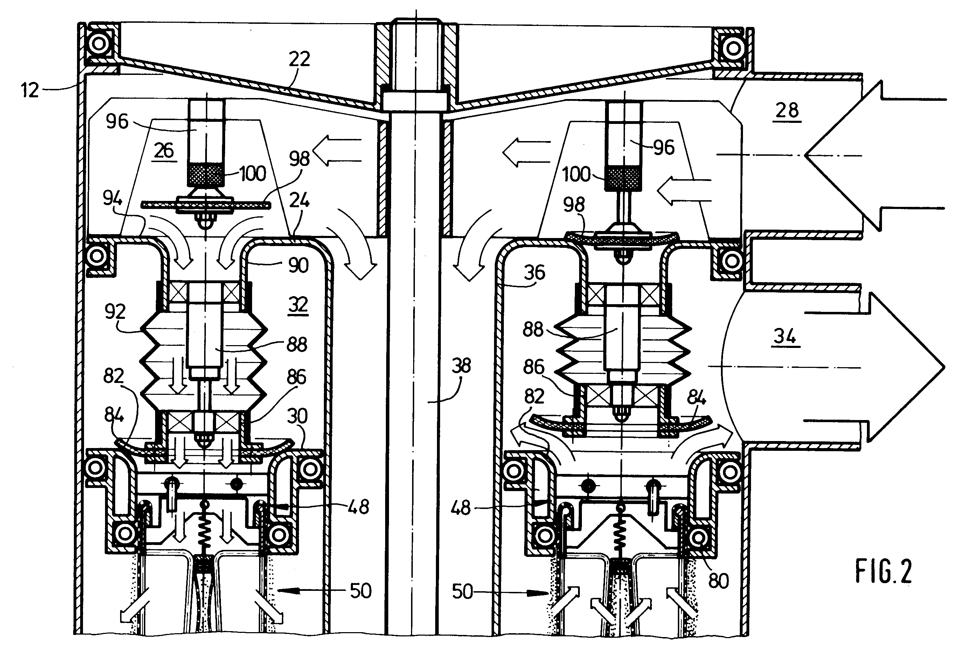

Am oberen Rand jedes Durchlasses 90 im oberen Zwischenboden 24 ist ebenfalls ein ringförmiger Ventilsitz 94 ausgebildet, der durch Betätigen eines Stelltriebs 96, beispielsweise wiederum einer pneumatischen Kolbenzylindereinheit, mit einem elastischen, scheibenförmigen Dichtkörper 98 verschließbar ist. Der Öffnungshub jedes Stelltriebs 96 ist einstellbar, beispielsweise mittels einer Rändelmutter 100. Die Stelltriebe 88 und 96 werden derart gesteuert, daß bei einer Gesamtanzahl von sechs Filterpatronen 50 jeweils mindestens eine, höchstens aber drei Filterpatronen gleichzeitig gereinigt werden, während die Restanzahl von mindestens drei und höchstens fünf Filterpatronen 50 vom verbrauchten Prozeßgas durchströmt werden. Im normalen Filterbetrieb einer Filterpatrone 50 wird, wie in der rechten Hälfte der Fig. 1 und 2 dargestellt, der dazugehörige untere Dichtkörper 84 von seinem Ventilsitz 82 abgehoben, so daß gefilterte Prozeßluft aus der betreffenden Filterpatrone 50 ungehindert in die Sammelkammer 32 strömen kann. Der zugehörige obere Dichtkörper 98 liegt hingegen auf seinem Ventilsitz 94, so daß eine Kurzschlußströmung von frischem Prozeßgas von der Verteilkammer 26 in die Sammelkammer 32 ausgeschlossen ist.

Die zum Reinigen einer Filterpatrone 50 vorgesehene Stellung der zugehörigen Doppelventilanordnung ist in der linken Hälfte der Fig. 1 und 2 abgebildet. Diese Stellung wird dadurch erreicht, daß erst der zugehörige untere Dichtkörper 84 auf seinen Ventilsitz 82 aufgesetzt wird, um die betreffende Filterpatrone 50 von der Sammelkammer 32 zu trennen. Anschließend wird der zugehörige obere Dichtkörper 98 von seinem Ventilsitz 94 abgehoben, so daß frische Prozeßluft aus der Verteilkammer 26 in die betreffende Filterpatrone 50 einströmen kann. Deren Filterschlauch 60 wird in seinem zylindrischen Teil 62 nach außen, in seinem kegelförmigen Teil 64 hingegen radial nach innen von den zugehörigen Drahtbügeln 56 weg aufgebläht, so daß anhaftende Staubablagerungen abplatzen und nach unten fallen.

Die dargestellten Doppelventilanordnungen können in der Weise abgewandelt werden, daß nur ein einziger ringförmiger Dichtkörper 84 vorhanden ist, der in seiner unteren Endstellung, wie in Fig. 1 und 2 links abgebildet, gegen den Ventilsitz 82 so abdichtet, in seiner oberen Endstellung jedoch gegen einen Ventilsitz abdichtet, der beispielsweise an einem ortsfesten Teil des Stelltriebs 96 ausgebildet ist. der obere Dichtkörper 98 samt zugehörigem Stelltrieb 96 kann dann fortgelassen werden. Einzelheiten einer solchen Doppelventilanordnung sind in der nicht vorveröffentlichten DE-A-39 41 321 dargestellt und beschrieben.

## Patentansprüche

1. Verfahren zum Führen von Prozeßgas, das in einer Apparatur, insbesondere Wirbelbettapparatur, eine Prozeßkammer (46) und anschließend eine Filtergruppe mit einer Gesamtanzahl von mindestens zwei Filterpatronen (50) durchströmt, während turnusmäßig jeweils eine Teilanzahl der Filterpatronen (50) für von der Prozeßkammer (46) kommende Gasströmung gesperrt und in entgegengesetzter Richtung von einem Reinigungsgas durchströmt wird,
dadurch **gekennzeichnet,** daß der Apparatur Prozeßgas in einer Gesamtmenge zugeführt wird, die den Gasbedarf der Prozeßkammer (46) im Verhältnis der genannten Teilanzahl zur Gesamtanzahl Filterpatronen (50) übersteigt, die überschüssige Teilmenge Prozeßgas in der Apparatur vor der Prozeßkammer (46) abgezweigt, als Reinigungsgas durch die genannte Teilanzahl Filterpatronen (50) geleitet und anschließend zusammen mit der aus der Prozeßkammer (46) kommenden Restmenge Prozeßgas durch die Restanzahl Filterpatronen (50) hindurch abgeführt wird.

2. Apparatur, insbesondere Wirbelbettapparatur, zum Durchführen des Verfahrens nach Anspruch 1, mit einem Behälter (10), der einen Gaseinlaß (28) und einen Gasauslaß (34) aufweist und eine durch ein zentrales Rohr (36) an den Gaseinlaß (28) angegeschlossene Prozeßkammer (46), eine an den Gasauslaß (34) angeschlossene Sammelkammer (32) sowie eine zwischen diesen Kammern (32, 46) angeordnete Filtergruppe mit mehreren Filterpatronen (50) enthält,
dadurch **gekennzeichnet,** daß die Sammelkammer (32) zwischen der Prozeßkammer (46) und einer Verteilkammer (26) angeordnet ist, die den Gaseinlaß (28) aufweist, mit der Prozeßkammer (46) durch das zentrale Rohr (36) verbunden ist und mit den Filterpatronen (50) turnusmäßig durch je eine Doppelventilanordnung verbindbar ist, die anschließend in eine Ruhestellung rückstellbar ist, in der sie einen Gasstrom von der zugehörigen Filterpatrone (50) in die Sammelkammer (32) zuläßt, diese jedoch von der Verteilkammer (26) trennt.

3. Apparatur nach Anspruch 2,
dadurch **gekennzeichnet,** daß
- die Verteilkammer (26) gegen die Sammelkammer (32) durch einen oberen Zwischenboden (24) abgegrenzt ist, an dem über jeder Filterpatrone (50) ein Rohrstück (86) höhenverstellbar aufgehängt ist,
- die Sammelkammer (32) gegen die Prozeßkammer (46) durch einen unteren Zwischenboden (30) abgegrenzt ist, an dem die Filterpatronen (50) aufgehängt sind, und
- jede Doppelventilanordnung einen oberen Ventilsitz (94) am oberen Zwischenboden (24) sowie einen unteren Ventilsitz (82) am unteren Zwischenboden (30) und mindestens einen mit einem Stelltrieb (88, 96) auf- und abbewegbaren Dichtkörper (84, 98) aufweist.

4. Apparatur nach Anspruch 3,
dadurch **gekennzeichnet,** daß jedem der Ventilsitze (94, 82) ein eigener, oberer bzw. unterer Dichtkörper (98, 84) zugeordnet ist, der mit einem eigenen Stelltrieb (96, 88) derart auf- und abbewegbar ist, daß ein direkter Gasstrom von der Verteilkammer (26) durch eine Doppelventilanordnung hindurch in die Sammelkammer (32) stets unmöglich ist.

5. Apparatur nach Anspruch 4,
dadurch **gekennzeichnet,** daß der obere Dichtkörper (98) jeder Doppelventilanordnung einen einstellbaren Öffnungshub hat.

## Claims

1. Method for the guiding of process gas which flows through an apparatus, in particular a fluidised bed apparatus, a process chamber (46) and then a filter group with a total number of at least two filter cartridges (50), while a fractional number of the filter cartridges (50) are closed in turn to gas flow coming from the process chamber (46) and they are swept by a cleaning gas in the opposite direction, characterised in that process gas is supplied to the apparatus in a total amount which exceeds the gas requirement of the process chamber (46) in the proportions of the above-mentioned fractional number to the total number of filter cartridges (50), the surplus fractional amount of process gas is diverted in the apparatus upstream of the process chamber (46), is passed as cleaning gas through the above-mentioned fractional number of filter cartridges (50) and is then led off through the residual number of filter cartridges (50) together with the residual amount of process gas coming out of the process chamber (46).

2. Apparatus, in particular a fluidised bed apparatus, for carrying out the method according to claim 1, with a vessel (10) which comprises a gas inlet (28) and a gas outlet (34) and contains a process chamber (46) linked by a central pipe (36) to the gas inlet (28), a collection chamber (32) linked to the gas outlet (34) and a filter group arranged between these chambers (32, 46) with a plurality of filter cartridges (50), characterised in that the collection chamber (32) is arranged between the process chamber (46) and a distribution chamber (26) which comprises the gas inlet (28), is connected to the process chamber (46) by the central pipe (36) and can be connected to each of the filter cartridges (50) in turn by a twin-valve arrangement which can then be returned to a rest position in which it permits a gas flow from the 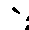 appropriate filter cartridge (50) into the collection chamber (32), but separates the latter from the distribution chamber (26).

3. Apparatus according to claim 2, characterised in that
- the distribution chamber (26) is divided off from the collection chamber (32) by an upper intermediate bottom (24) on which a section of piping (86) is suspended adjustable in height above each filter cartridge (50),
- the collection chamber (32) is divided off from the process chamber (46) by a lower intermediate bottom (30) on which the filter cartridges (50) are suspended, and
- each twin-valve arrangement comprises an upper valve seat (94) on the upper intermediate bottom (24) and a lower valve seat (82) on the lower intermediate bottom (30) and at least one sealing member (84, 98) movable up and down by means of a positioning mechanism (88, 96).

4. Apparatus according to claim 3, characterised in that there is assigned to each of the valve seats (94, 82) its own upper or lower sealing member (98, 84) which is movable up and down by means of its own positioning mechanism (96, 88) in such a way that a direct gas flow from the distribution chamber (26) through a twin-valve arrangement into the collection chamber (32) is impossible at all times.

5. Apparatus according to claim 4, characterised in that the upper sealing member (98) of each twin valve arrangement has an adjustable degree of opening.

## Revendications

1. Procédé pour guider un gaz de traitement qui passe dans un dispositif, en particulier dans un dispositif de lit fluidisé, à travers une chambre de traitement (46) puis à travers un groupe filtrant constitué d'un nombre total d'au moins deux cartouches filtrantes (50), tandis qu'un nombre partiel de cartouches filtrantes (50) est alternativement fermé à l'arrivée du flux de gaz en provenance de la chambre de traitement (46) et est traversé dans le sens opposé par un gaz de nettoyage,
caractérisé en ce que le dispositif reçoit une quantité totale de gaz de traitement qui est supérieure à la quantité de gaz nécessaire dans la chambre de traitement (46) compte tenu du rapport du nombre partiel sur le nombre total des cartouches filtrantes (50) et en ce que la quantité partielle de gaz de traitement en excès présente dans le dispositif est dérivée avant d'arriver à la chambre de traitement (46), est conduite en tant que gaz de nettoyage à travers ledit nombre partiel de cartouches filtrantes (50) et est ensuite conduite avec le reste du gaz de traitement provenant de la chambre de traitement (46) à travers le nombre restant de cartouches filtrantes (50).

2. Dispositif, en particulier dispositif à lit fluidisé, pour appliquer le procédé selon la revendication 1, avec un réservoir (10) qui présente un orifice d'admission de gaz (28) et un orifice de sortie de gaz (34) et comprend une chambre de traitement (46) raccordée a l'orifice d'admission de gaz (28) par un conduit central (36), une chambre collectrice (32) raccordée à l'orifice de sortie de gaz (34), ainsi qu'un groupe filtrant de plusieurs cartouches filtrantes (50), disposé entre ces chambres (32, 46),
caractérisé en ce que la chambre collectrice (32), située entre la chambre de traitement (46) et une chambre de distribution (26) qui présente l'orifice d'admission de gaz (28), est raccordée à la chambre de traitement (46) par le conduit central (36) et peut être raccordée alternativement aux cartouches filtrantes (50) par un dispositif à double soupape associé, qui peut ensuite être ramené à sa position de repos dans laquelle il laisse passer dans la chambre collectrice (32) un flux de gaz en provenance des cartouches filtrantes correspondantes mais sépare ladite chambre collectrice de la chambre de distribution (26).

3. Dispositif selon la revendication 2,
caractérisé en ce que :
- la chambre de distribution (26) est séparée de la chambre collectrice (32) par une cloison intermédiaire supérieure (24) à laquelle est suspendu, au-dessus de chaque cartouche filtrante (50), un élément de conduit (86) à hauteur variable,
- la chambre collectrice (32) est séparée de la chambre de traitement (46) par une paroi intermédiaire inférieure (30) à laquelle les cartouches filtrantes sont suspendues, et
- chaque dispositif à double soupape comprend un siège de soupape supérieur (94) au niveau de la paroi intermédiaire supérieure (24) ainsi qu'un siège de soupape inférieur (82) au niveau de la paroi intermédiaire inférieure (30), et au moins un corps étanche (84, 98) susceptible d'être déplacé vers le haut ou vers le bas au moyen d'une commande de soupape (88, 96).

4. Dispositif selon la revendication 3,
caractérisé en ce que chaque siège de soupape (94, 82) est associé à un corps étanche inférieur ou supérieur (98, 84), susceptible d'être déplacé vers le haut ou vers le bas grâce à une commande de soupape associée, de telle sorte qu'il est constamment impossible à un courant de gaz de passer directement de la chambre de distribution (26) à la chambre collectrice (32) en passant par un dispositif à double soupape.

5. Dispositif selon la revendication 4,
caractérisé en ce que le corps étanche supérieur (98) de chaque dispositif à double soupape a une course d'ouverture réglable.
